# EUROPEAN PATENT SPECIFICATION

(11) **EP 0 568 019 B1**
(45) Date of publication and mention of the grant of the patent: **28.08.1996**
(21) Application number: 93106825.8
(22) Date of filing: 27.04.1993
(51) Int. Cl.: F02N 15/02

(54) **Starter drive for internal combustion engines**
Anlasserritzel für Verbrennungsmotor
Lanceur de démarreur pour moteur à combustion interne

(30) Priority: 28.04.1992 BG 96274/92
(43) Date of publication of application: 03.11.1993
(73) Proprietor: Philipov, Dimitar Blagoev, Sofia (BG); Baronov, Valeri Dimitrov, Sofia (BG); Ninov, Gavril Ivanov, Sofia (BG); Penchev, Ivan Tzachev, Sofia (BG); Valkov, Dimitar Petrov, Sofia (BG)
(72) Inventor: Philipov, Dimitar Blagoev, Sofia (BG); Baronov, Valeri Dimitrov, Sofia (BG); Ninov, Gavril Ivanov, Sofia (BG); Penchev, Ivan Tzachev, Sofia (BG); Valkov, Dimitar Petrov, Sofia (BG)
(74) Representative: Finck, Dieter, Dr.Ing.

(56) References cited:
- EP-A- 0 306 761
- FR-A- 1 241 395
- US-A- 4 792 028

## Description

The invention relates to a starter drive for internal combustion engines which is applicable in machine-building and especially in transport machine-building.

The FR-A-1 241 395 discloses a starter drive for internal combustion engines comprising a plurality of wedging sprags mounted between two contact surfaces having a circular cross-section, one of which belongs to the starter drive casing and the other to the driving gear shaft wherein both contact surfaces have a circular cross-section, while the sprags have a non-circular cross-section and are placed in rectangular holes in at least one outer and at least one inner rigid cages, between which a band cage is placed, whereby said at least one outer and at least one inner rigid cages are formed as annular bodies and said at least one outer rigid cage has a strengthening rim disposed on one end of the body.

A disadvantage of the starter drive known from the FR-A-1 241 395 is the complicated form of the band cage. This form as well as the forms of the outer and inner rigid cages can cause difficulties during the assembly process of the starter drive. In particular, it is not easy to mount the sprags into the holes in the outer and inner rigid cages.

The DE-A-31 38 466 discloses another prior art starter drive for internal combustion engines which includes a plurality of wedging rollers, each of which together with the embraced supporting pin together with a resetting spring are disposed in separate holes, formed between outer and inner contact surfaces. The inner contact surface has a circular cross-section and belongs to the starter driving gear shaft. The outer contact surface has a complicated curve form and belongs to the starter drive casing.

A disadvantage of the starter drive known from the DE-A-31 38 466 is the complicated construction, particularly of the outer contact surface, the elaboration of which requires complicated and expensive technological equipment. Moreover, the maximum torque, i.e. the loading capacity, of the device is limited by the rollers' contact radius. The clutching of the rollers in one line of the outer contact surface leads to a fast wearing out of the contact areas which decreases the durability of the device. Furthermore the construction excludes the opportunity to assemble starter drives with different clutching directions from one and the same details.

The object of the invention is the creation of a starter drive for internal combustion engines with a simplified construction and increased reliability, loading capacity and durability.

The present invention provides a starter drive for internal combustion engines comprising a plurality of wedging sprags mounted between two contact surfaces having a circular cross-section, one of which belongs to the starter drive casing and the other to the driving gear shaft wherein both contact surfaces have a circular cross-section, while the sprags have a non-circular cross-section and are placed in rectangular holes in at least one outer and at least one inner rigid cages, between which a band cage is placed, whereby said at least one outer and at least one inner rigid cages are formed as annular bodies and said at least one outer rigid cage has a strengthening rim disposed on one end of the body, which starter drive is characterized in that said holes in said at least one outer rigid cage are open at the end of the body which is opposite to the end of the body at which the strengthening rim is disposed, that said at least one inner rigid cage has a strengthening rim and said holes in said at least one inner rigid cage are open at the end of the body which is opposite to the end of the body at which the strengthening rim is disposed, and that said band cage is smooth.

According to another embodiment of the invention the strenghtening rims of the at least one outer and at least one inner rigid cages are disposed at the same ends.

According to still another embodiment of the invention the strengthening rims of the at least one outer and at least one inner rigid cages are disposed at opposite ends.

In a further embodiment of the invention two symmetrical inner rigid cages form a composite inner cage.

In a still further embodiment of the invention the strengthening rim of each inner rigid cage protrudes in a direction inward from the body of the cage.

The advantages of the starter drive according to the present invention are a simplified construction and easy manufacturing, providing increased reliability and loading capacity due to the fact that the rectangular holes of the rigid cages are open at one end.

The invention will now be described in detail by way of examples and with reference to the accompanying drawings, in which:
Fig. 1 is a partial longitudinal sectional view of a starter drive for an internal combustion engine;
Fig. 2 is a cross-sectional view of a starter drive taken along the line A-A of Fig. 1;
Fig. 3 is an axonometric projection of a rigid outer cage;
Fig. 4 is an axonometric projection of a rigid inner cage;
Fig. 5 is an embodiment of the starter drive with strenghtening rims of the outer and inner cages disposed at the same ends.
Fig. 6 shows an embodiment of the invention with strengthening rims of the outer and inner cages disposed at opposite ends.
Fig. 7 shows an embodiment of the invention where the outer and inner cages include two symmetrical parts.

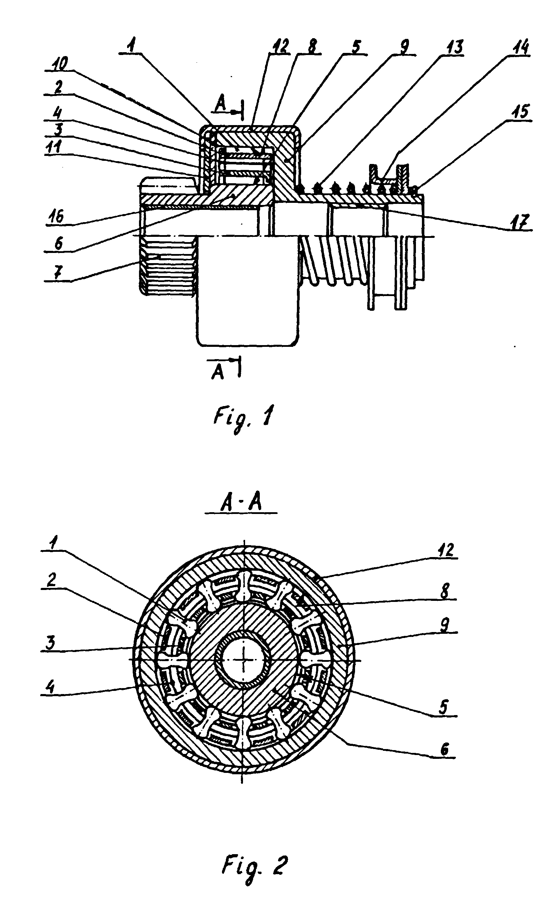

The starter drive in accordance with the invention consists of a plurality of wedging sprags 1 (Fig. 1 and Fig. 2) with non-circular cross-sections, which are placed in rectangular holes in outer 2 and inner 3 rigid cages which holes are open at one end. Between the outer 2 and inner 3 rigid cages a resilient smooth band cage 4 is disposed, which serves for resetting the sprags 1. The cages 2, 3 and 4, together with the sprags 1, are placed between one inner contact surface 5 with circular cross-section, which belongs to the shaft 6 of the driving gear 7 of the starter drive, and one outer contact surface 8 with circular cross-section, formed in a casing 9 of the starter drive. A washer 10, a two-piece washer 11 and a rolled thin-walled hub 12 serve to prevent the sprags 1 from axial displacement. On the casing 9 of the starter drive, a cylindrical helical spring 13, a guiding member 14 and a stop-ring 15 are mounted.

The casing 9 of the starter drive is mounted on the rotor shaft of the starter motor (not shown in the Figs.) where a hub 16 is a sliding-contact bearing during the rotating of the driving gear 7. The electromagnet's fork of the starter motor (not shown) is mounted to the guiding member 14. In the casing 9 of the starter drive, helical channels 17 are elaborated.

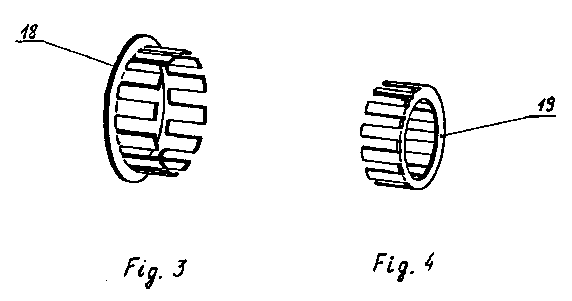

The outer 2 and inner 3 cages have strengthening or reinforcing rims 18 and 19 (Fig. 3 and Fig. 4).

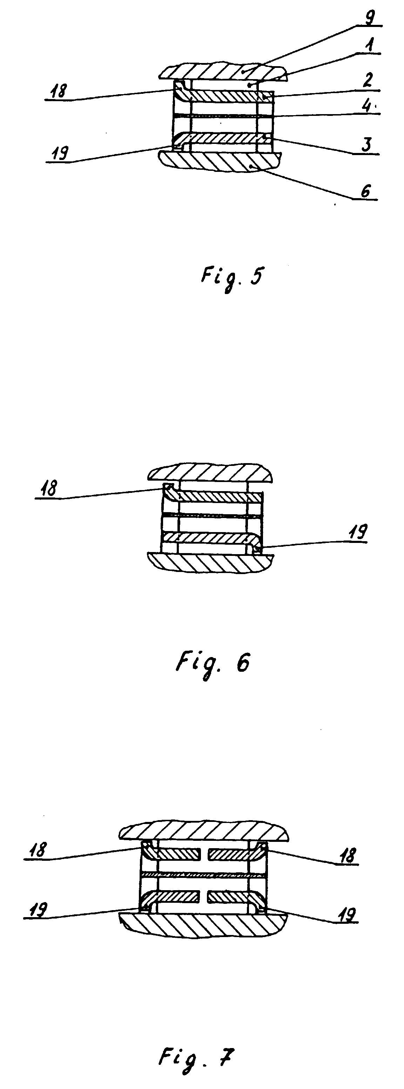

According to the embodiments shown in Figs. 5 and 6, the strengthening rims 18 and 19 of the outer 2 and inner 3 rigid cages are disposed at the same ends or at opposite ends respectively.

In the embodiment of the invention illustrated in Fig. 7, the outer 2 and inner 3 rigid cages are formed from two symmetrical parts.

The operation of the starter drive is described as follows:

After applying voltage to the starter motor and to the electromagnet (not shown in the Figs.), the casing of the starter drive turns due to the helical channels 17 and displaces axially by the electromagnet's fork until the driving gear 7 clutches to the flywheel of the internal combustion engine. The torque of the starter motor transmits from the casing 9 of the starter drive through wedged sprags 1 to the driving gear 7, which drives the internal combustion engine until the ignition occurs. After the ignition the revolutions of the flywheel increase rapidly, which causes raising of the revolutions of the still clutched gear 7 to the flywheel. In that moment the sprags 1 due to their particular shape escape from clutching with the contact surfaces 5 and 8, preventing that way the starter motor from damages.

After disconnecting the power supply of the starter motor the starter drive turns back to its initial position.

## Claims

1. Starter drive for internal combustion engines comprising a plurality of wedging sprags mounted between two contact surfaces having a circular cross-section, one of which belongs to the starter drive casing and the other to the driving gear shaft wherein both contact surfaces (5) and (8) have a circular cross-section, while the sprags (1) have a non-circular cross-section and are placed in rectangular holes in at least one outer (2) and at least one inner (3) rigid cages, between which a band cage (4) is placed, whereby said at least one outer (2) and at least one inner (3) rigid cages are formed as annular bodies and said at least one outer rigid cage (2) has a strengthening rim (18) disposed on one end of the body,
characterized in that
- said holes in said at least one outer rigid cage (2) are open at the end of the body which is opposite to the end of the body at which the strengthening rim (18) is disposed,
- said at least one inner rigid cage (3) has a strengthening rim (19) and said holes in said at least one inner rigid cage (3) are open at the end of the body which is opposite to the end of the body at which the strengthening rim (19) is disposed, and
- said band cage (4) is smooth.

2. Starter drive as in claim 1, characterized in that the strengthening rims (18, 19) of the at least one outer (2) and at least one inner (3) rigid cages are disposed at the same ends.

3. Starter drive as in claim 1, characterized in that the strenghtening rims (18, 19) of the at least one outer (2) and at least one inner (3) rigid cages are disposed at opposite ends.

4. Starter drive as in claim 1, characterized by two symmetrical inner rigid cages (3) forming a composite inner cage.

5. Starter drive as in any of the claims 1 to 4, characterized in that the strengthening rim of each inner rigid cage (3) protrudes in a direction inward from the body of the cage.

## Patentansprüche

1. Anlasserantrieb für Brennkraftmaschinen mit einer Vielzahl von Hemmkeilen, die zwischen zwei Kontaktflächen angeordnet sind, die einen kreisförmigen Querschnitt haben und von denen die eine zum Anlasserantriebsgehäuse und die andere zu der Treibzahnradwelle gehört, wobei beide Kontaktflächen (5) und (8) einen kreisförmigen Querschnitt haben, während die Hemmkeile (1) einen nicht kreisförmigen Querschnitt aufweisen und in rechteckigen Löchern in wenigstens einem äußeren (2) und wenigstens einem inneren (3) starren Käfig angeordnet sind, zwischen denen ein Bandkäfig (4) angeordnet ist, wobei der wenigstens eine äußere (2) und der wenigstens eine innere (3) starre Käfig als ringförmige Körper ausgebildet sind und der wenigstens eine äußere starre Käfig (2) einen Verstärkungsrand (18) aufweist, der an einem Ende des Körpers vorgesehen ist,
dadurch gekennzeichnet,
- daß die Löcher in dem wenigstens einen äußeren starren Käfig (2) an dem Ende des Körpers offen sind, das dem Ende des Körpers gegenüberliegt, an dem der Verstärkungsrand (18) vorgesehen ist,
- daß der wenigstens eine innere starre Käfig (3) einen Verstärkungsrand (19) aufweist und die Löcher in dem wenigstens einen inneren starren Käfig (3) an dem Ende des Körpers offen sind, das dem Ende des Körpers gegenüberliegt, an welchem der Verstärkungsrand (19) vorgesehen ist, und
- daß der Bandkäfig (4) glatt ist.

2. Anlasserantrieb nach Anspruch 1, dadurch gekennzeichnet, daß die Verstärkungsränder (18, 19) des wenigstens einen äußeren (2) und des wenigstens einen inneren (3) starren Käfigs an den gleichen Stirnseiten angeordnet sind.

3. Anlasserantrieb nach Anspruch 1, dadurch gekennzeichnet, daß die Verstärkungsränder (18, 19) des wenigstens einen äußeren (2) und des wenigstens einen inneren (3) starren Käfigs an gegenüberliegenden Stirnseiten angeordnet sind.

4. Anlasserantrieb nach Anspruch 1, gekennzeichnet durch zwei symmetrische innere starre Käfige (3), die einen inneren Verbundkäfig bilden.

5. Anlasserantrieb nach einem der Ansprüche 1 bis 4, dadurch gekennzeichnet, daß der Verstärkungsrand eines jeden inneren starren Käfigs (3) in eine Richtung nach innen von dem Körper des Käfigs vorsteht.

## Revendications

1. Mécanisme d'entraînement du démarreur pour des moteurs à combustion interne comprenant une multitude de corps cunéiformes montés entre deux surfaces de contact ayant une section transversale ronde l'une desquelles appartient au boîtier du mécanisme d'entraînement du démarreur et l'autre est celle du pignon engrenant, où les deux surfaces de contact (5) et (8) ont une section transversale ronde tandis que les corps cunéiformes (1) n'ont pas de section transversale ronde et sont disposés dans des ouvertures rectangulaires dans au moins une cage rigide exterieure (2) et dans au moins une cage rigide intérieure (3), entre lesquelles est disposée une cage à ruban (4) et les susmentionnées au moins une cage rigide extérieure (2) et au moins une cage rigide intérieure (3) ont la forme de corps annulaires et la susmentionnée au moins une cage rigide extérieure (2) possède un bord de renfort (18) disposé sur une des ses extrémités,
caracterisé par le fait que
- les ouvertures susmentionnées dans la susmentionnée au moins une cage rigide extérieure (2) sont ouvertes dans cette extrémité du corps qui est à l'opposé de l'extrémité du corps où est disposée le bord de renfort (18),
- la susmentionnée au moins une cage rigide intérieure (3) possède un bord de renfort (19) et les ouvertures susmentionnées dans la susmentionnée au moins une cage rigide intérieure (3) sont ouvertes dans cette extrémité du corps qui est à l'opposé de l'extrémité du corps où est disposée le bord de renfort (19) et
- la susmentionnée cage est lisse.

2. Mécanisme d'entraînement du démarreur conformément à la revendication 1, caractérisé par le fait que les bords de renfort (18, 19) de la au moins une cage rigide extérieure (2) et au moins une cage rigide intérieure (3) sont disposés aux mêmes extrémités.

3. Mécanisme d'entraînement du démarreur conformément à la revendication 1, caractérisé par le fait que les bords de renfort (18, 19) de la au moins une cage rigide extérieure (2) et au moins une cage rigide intérieure (3) sont disposés à extrémités opposées.

4. Mécanisme d'entraînement du démarreur conformément à la revendication 1, caractérisé par deux cages intérieures rigides (3) formant une cage composée intérieure.

5. Mécanisme d'entraînement du démarreur conformément à chacune des revendications 1 à 4, caractérisé par le fait que le bord de renfort de chaque cage rigide intérieure (3) fait saillie vers l'intérieur par rapport au corps de la cage.
